# EUROPEAN PATENT SPECIFICATION

(11) **EP 2 773 013 B1**
(45) Date of publication and mention of the grant of the patent: **03.04.2019**
(21) Application number: 13738047.3
(22) Date of filing: 06.01.2013
(51) Int. Cl.: H01M 10/48, H02J 7/00

(54) **CHARGING CIRCUIT AND CHARGER**
LADESCHALTUNG UND LADEVORRICHTUNG
CIRCUIT DE CHARGE ET CHARGEUR

(30) Priority: 16.01.2012 CN 201210013672
(43) Date of publication of application: 03.09.2014
(73) Proprietor: Huawei Device (Dongguan) Co., Ltd., Dongguan, Guangdong 523808 (CN)
(72) Inventor: LI, Hualin, Shenzhen Guangdong 518129 (CN); JIN, Linfang, Shenzhen Guangdong 518129 (CN); ZHOU, Liechun, Shenzhen Guangdong 518129 (CN)
(74) Representative: Gill Jennings & Every LLP
(86) International application number: PCT/CN2013/070091
(87) International publication number: WO 2013/107303

(56) References cited:
- CN-C- 1 118 916
- CN-U- 201 584 763
- JP-A- 2009 183 105
- JP-A- 2009 268 345
- US-A- 6 075 342
- US-A1- 2005 017 692
- US-A1- 2006 220 620
- US-A1- 2008 212 345
- US-A1- 2008 284 379
- US-A1- 2009 237 142
- US-A1- 2010 176 768

## Description

### TECHNICAL FIELD

The present invention relates to the field of charging circuits, and in particular, to a charging circuit and a charger.

### BACKGROUND

Nowadays, with widespread use of electronic terminals, chargers for charging the electronic terminals are also widely used. In general, an existing charger provides overvoltage protection or over-current protection during charging.

However, when a user charges the electronic terminal such as a mobile phone, a product being charged or the charger may generate considerable heat because of an excessively high charging current. This affects user experience and the heat may even lead to a thermal safety accident. JP 2009-183105 , CN 1118916 C, CN 201584763 U, US 2010/0176768 A1, US 2008/0284379 A1, US 2009/237142 and US 2008/0212345 each disclose control methods for charging circuits.

### SUMMARY

An objective of embodiments of the present invention is to provide a charging circuit to resolve a problem that a thermal safety accident may be caused by considerable heat generated by a product being charged or a charger because of an excessively high charging current during charging.

The invention is defined by claim 1 which has been delimited against US 2008 284379.

Preferred embodiments are set out in the dependent claims.

In the embodiments of the present invention, a charging circuit adjusts magnitude of a charging current according to a temperature of a product being charged or a charger, and then controls the temperature of the product being charged or the charger, thereby greatly improving user experience, and enhancing safety performance of the product with a heat protection function.

### BRIEF DESCRIPTION OF DRAWINGS

FIG. 1 is a module structural diagram of a charging circuit according to an embodiment of the present invention; and
FIG. 2 is a circuit structural diagram of a charging circuit according to an embodiment of the present invention.

### DESCRIPTION OF EMBODIMENTS

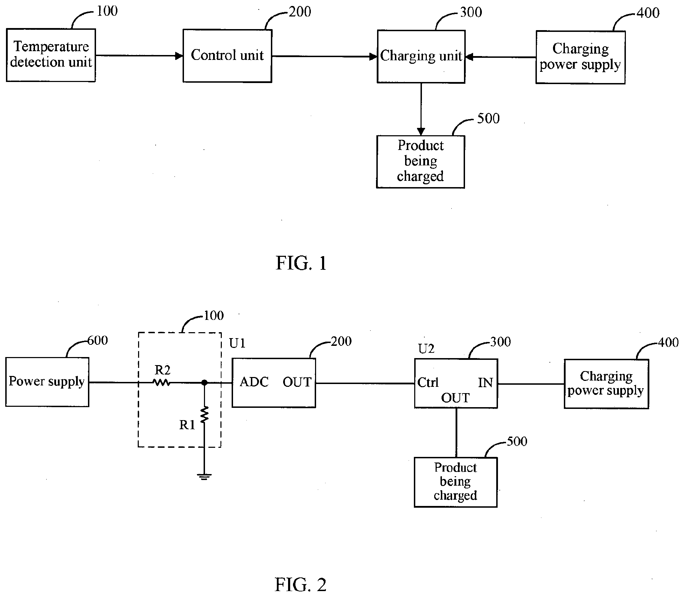

To make the objectives, technical solutions, and advantages of the present invention clearer and more comprehensible, the following further describes the present invention in detail with reference to the accompanying drawings and embodiments. It should be understood that the specific embodiments described herein are merely used to explain the present invention but are not intended to limit the present invention. FIG. 1 illustrates a module structure of a charging circuit according to an embodiment of the present invention. For ease of description, only a part related to this embodiment of the present invention is illustrated.

The charging circuit includes:
a temperature detection unit 100, configured to detect a temperature of a product 500 being charged or a charger and generate temperature detection information;
a charging unit 300, disposed between a charging power supply 400 and the product 500 being charged, and configured to provide a charging current for the product 500 being charged; and
a control unit 200, separately connected to the temperature detection unit 100 and the charging unit 300, and configured to: separately compare the temperature detection information with a preset temperature upper limit and a preset temperature lower limit, control the charging unit 300 so as to reduce the charging current when the temperature of the product 500 being charged or the charger reaches the temperature upper limit, and control the charging unit 300 so as to increase the charging current when the temperature of the product 500 being charged or the charger reaches the temperature lower limit.

FIG. 2 illustrates a circuit structure of the charging circuit according to the embodiments of the present invention. For ease of description, only a part related to the embodiments of the present invention is illustrated.

In one embodiment of the present invention, the temperature detection unit 100 includes:
a thermistor R1 and a voltage divider resistor R2, where:
a first terminal of the voltage divider resistor R2 connects to a power supply 600, a second terminal of the voltage divider resistor R2 is grounded by using the thermistor R1, and a common connection terminal between the voltage divider resistor R2 and the thermistor R1 connects to the control unit 200.

The power supply 600 is a power supply terminal of a board power manager (PMU) or a charger.

In one embodiment of the present invention, the control unit 200 includes a main processing chip U1, where a detection terminal ADC of the main processing chip U1 connects to the common connection terminal between the voltage divider resistor R2 and the thermistor R1, and an output terminal OUT of the main processing chip U1 connects to the charging unit 300.

In one embodiment of the present invention, the charging unit 300 includes a charging chip U2, where an input terminal IN of the charging chip U2 connects to the charging power supply 400, a control terminal Ctrl of the charging chip U2 connects to the output terminal OUT of the main processing chip U1, and an output terminal OUT of the charging chip U2 connects to the product 500 being charged.

In one embodiment of the present invention, the thermistor R1 is located on a board in a superheated area of the charger's housing or a board in a superheated area of a housing of the product 500 being charged.

An embodiment of the present invention further provides a charger, where the charger includes a charging circuit. As shown in FIG. 1, the charging circuit includes:
a temperature detection unit 100, configured to detect a temperature of a product 500 being charged or the charger and generate temperature detection information;
a charging unit 300, disposed between a charging power supply 400 and the product 500 being charged, and configured to provide a charging current for the product 500 being charged; and
a control unit 200, separately connected to the temperature detection unit 100 and the charging unit 300, and configured to: separately compare the temperature detection information with a preset temperature upper limit and a preset temperature lower limit, control the charging unit 300 so as to reduce the charging current when the temperature of the product 500 being charged or the charger reaches the temperature upper limit, and control the charging unit 300 so as to increase the charging current when the temperature of the product 500 being charged or the charger reaches the temperature lower limit.

As shown in FIG. 2, in one embodiment of the present invention, the temperature detection unit 100 includes:
a thermistor R1 and a voltage divider resistor R2, where:
a first terminal of the voltage divider resistor R2 connects to a power supply 600, a second terminal of the voltage divider resistor R2 is grounded by using the thermistor R1, and a common connection terminal between the voltage divider resistor R2 and the thermistor R1 connects to the control unit 200.

The power supply 600 is a power supply terminal of a board power manager (PMU) or the charger.

In one embodiment of the present invention, the control unit 200 includes a main processing chip U1, where a detection terminal ADC of the main processing chip U1 connects to the common connection terminal between the voltage divider resistor R2 and the thermistor R1, and an output terminal OUT of the main processing chip U1 connects to the charging unit 300.

In one embodiment of the present invention, the charging unit 300 includes a charging chip U2, where an input terminal IN of the charging chip U2 connects to the charging power supply 400, a control terminal Ctrl of the charging chip U2 connects to the output terminal OUT of the main processing chip U1, and an output terminal OUT of the charging chip U2 connects to the product 500 being charged.

In one embodiment of the present invention, the thermistor R1 is located on a board in a superheated area of the charger's housing or a board in a superheated area of a housing of the product 500 being charged.

An operating principle of a charging circuit is as follows:
First, a thermistor R1 is installed on a board in a superheated area of a charger's housing or on a board in a superheated area of a housing of a product being charged, where the thermistor R1 is configured to detect a temperature of the charger or a product 500 being charged; power is supplied to the thermistor R1 via a voltage divider resistor R2 and by using a power supply terminal of a board power manager (PMU) or the charger to form a temperature detection circuit. A main processing chip U1 obtains temperature detection information detected by the thermistor R1 by using a detection terminal ADC, the main processing chip U1 sets a temperature upper limit and a temperature lower limit in advance by using software, and compares the temperature detection information with the preset temperature upper limit and the preset temperature lower limit; when the temperature of the product 500 being charged or the charger reaches the temperature upper limit, the main processing chip U1 outputs a control signal from an output terminal OUT, and controls a charging chip U2 so as to reduce a charging current for the product 500 being charged, thereby reducing heat consumption during charging and achieving an objective of reducing the temperature of the charger or the product 500 being charged.

With adjustment of the charging current, when the temperature of the product 500 being charged or the charger reaches the temperature lower limit, the main processing chip U1 controls the charging chip U2 so as to increase the charging current, thereby quickening a charging speed. In this way, a cyclic control may achieve an objective of both ensuring a charging speed and improving thermal experience of a user (or thermal safety of the product).

In the embodiments of the present invention, a charging circuit with heat protection adjusts magnitude of a charging current according to a temperature of a product being charged or a charger, and then controls the temperature of the product being charged or the charger, thereby greatly improving user experience, and enhancing safety performance of the product with the heat protection function.

## Claims

1. A charging circuit, wherein the charging circuit comprises:
a temperature detection unit (100), configured to detect a temperature of a product (500) being charged or of a charger comprising the charging circuit, and to generate temperature detection information;
a charging unit (300), disposed between a charging power supply (400) and the product (500) being charged, and configured to provide a charging current for the product (500) being charged; and
a control unit (200) configured to: compare the temperature detection information with a preset temperature upper limit and a preset temperature lower limit which is lower than the preset temperature upper limit, control the charging unit (300) so as to reduce the charging current when the temperature of the product (500) being charged or of the charger reaches the temperature upper limit, and control the charging unit (300) so as to increase the charging current when the temperature of the product (500) being charged or the charger reaches the temperature lower limit;
**characterised in that**:
the temperature detection unit (100) comprises:
a thermistor (R1) and a voltage divider resistor (R2), wherein:
a first terminal of the voltage divider resistor (R2) connects to a power supply (600), a second terminal of the voltage divider resistor (R2) is grounded through the thermistor (R1), and a common connection terminal between the voltage divider resistor (R2) and the thermistor (R1) connects to the control unit (200);
wherein the control unit (200) comprises a main processing chip (U1), wherein a detection terminal (ADC) of the main processing chip (U1) connects to the common connection terminal between the voltage divider resistor (R2) and the thermistor (R1), and an output terminal (OUT) of the main processing chip (U1) connects to the charging unit (300).

2. The charging circuit according to claim 1, wherein the charging unit (300) comprises a charging chip (U2), wherein an input terminal IN of the charging chip (U2) connects to the charging power supply (400), a control terminal. (Ctrl) of the charging chip (U2) connects to the output terminal (OUT) of the main processing chip (U1), and an output terminal (OUT) of the charging chip (U2) connects to the product (500) being charged.

3. A charger, comprising a charging circuit according to claim 1 or claim 2.

## Patentansprüche

1. Ladeschaltung, wobei die Ladeschaltung aufweist:
eine Temperaturerfassungseinheit (100), die dazu eingerichtet ist, eine Temperatur eines Produkts (500), das geladen wird, oder einer Ladevorrichtung, die die Ladeschaltung aufweist, zu erfassen und Temperaturerfassungsinformationen zu erzeugen;
eine Ladeschaltung (300), die zwischen einer Ladestromversorgung (400) und dem Produkt (500), das geladen wird, angeordnet ist und dazu eingerichtet, einen Ladestrom für das Produkt (500), das geladen wird, vorzusehen; und
eine Steuereinheit (200), die dazu eingerichtet ist, die Temperaturerfassungsinformationen mit einer voreingestellten Temperaturobergrenze und einer voreingestellten Temperaturuntergrenze, die niedriger ist als die voreingestellte Temperaturobergrenze, zu vergleichen, die Ladeschaltung (300) so zu steuern, dass der Ladestrom verringert wird, wenn die Temperatur des Produkts (500), das geladen wird, oder der Ladevorrichtung die Temperaturobergrenze erreicht, und die Ladeschaltung (300) so zu steuern, das der Ladestrom erhöht wird, wenn die Temperatur des Produkts (500), das geladen wird, oder der Ladevorrichtung die Temperaturuntergrenze erreicht;
**dadurch gekennzeichnet, dass**:
die Temperaturerfassungseinheit (100) aufweist:
einen Thermistor (R1) und einen Spannungsteilerwiderstand (R2), wobei:
ein erster Anschluss des Spannungsteilerwiderstands (R2) eine Verbindung mit einer Stromzufuhr (600) herstellt, ein zweiter Anschluss des Spannungsteilerwiderstands (R2) durch den Thermistor (R1) geerdet ist, und eine gemeinsame Anschlussklemme zwischen dem Spannungsteilerwiderstand (R2) und dem Thermistor (R1) eine Verbindung mit der Steuereinheit (200) herstellt;
wobei die Steuerungseinheit (200) einen Hauptverarbeitungschip (U1) aufweist, wobei ein Erfassungsanschluss (ADC) des Hauptverarbeitungschips (U1) eine Verbindung mit der gemeinsamen Anschlussklemme zwischen dem Spannungsteilerwiderstand (R2) und dem Thermistor (R1) herstellt, und ein Ausgangsanschluss (OUT) des Hauptverarbeitungschips (U1) eine Verbindung mit der Ladeschaltung (300) herstellt.

2. Ladeschaltung nach Anspruch 1, wobei die Ladeschaltung (300) einen Ladechip (U2) aufweist, wobei ein Eingangsanschluss IN des Ladechips (U2) eine Verbindung mit der Ladestromversorgung (400) herstellt, ein Steueranschluss (Ctrl) des Ladechips (U2) eine Verbindung mit dem Ausgangsanschluss (OUT) des Hauptverarbeitungschips (U1) herstellt, und ein Ausgangsanschluss (OUT) des Ladechips (U2) eine Verbindung mit dem Produkt (500), das geladen wird, herstellt.

3. Ladevorrichtung mit einer Ladeschaltung nach Anspruch 1 oder Anspruch 2.

## Revendications

1. Circuit de charge, dans lequel le circuit de charge comprend :
une unité de détection de température (100), configurée pour détecter une température d'un produit (500) en cours de charge ou d'un chargeur comprenant le circuit de charge, et pour générer des informations de détection de température ;
une unité de charge (300), disposée entre une alimentation de charge (400) et le produit (500) en cours de charge, et configurée pour fournir un courant de charge pour le produit (500) en cours de charge ; et
une unité de commande (200) configurée pour : comparer les informations de détection de température avec une limite supérieure de température prédéfinie et une limite inférieure de température prédéfinie qui est inférieure à la limite supérieure de température prédéfinie, commander l'unité de charge (300) afin de réduire le courant de charge lorsque la température du produit (500) en cours de charge ou du chargeur atteint la limite supérieure de température, et commander l'unité de charge (300) de manière à augmenter le courant de charge lorsque la température du produit (500) en cours de charge ou du chargeur atteint la limite inférieure de température ;
**caractérisé en ce que** :
l'unité de détection de température (100) comprend :
une thermistance (R1) et une résistance de division de tension (R2), dans lequel :
une première borne de la résistance de division de tension (R2) est connectée à une alimentation électrique (600), une seconde borne de la résistance de division de tension (R2) est mise à la masse par le biais de la thermistance (R1), et une borne de connexion commune entre la résistance de division de tension (R2) et la thermistance (R1) est connectée à l'unité de commande (200) ;
dans lequel l'unité de commande (200) comprend une puce de traitement principale (U1), dans lequel une borne de détection (ADC) de la puce de traitement principale (U1) est connectée à la borne de connexion commune située entre la résistance de division de tension (R2) et la thermistance (R1), et une borne de sortie (OUT) de la puce de traitement principale (U1) est connectée à l'unité de charge (300).

2. Circuit de charge selon la revendication 1, dans lequel l'unité de charge (300) comprend une puce de charge (U2), dans lequel une borne d'entrée (IN) de la puce de charge (U2) est connectée à l'alimentation de charge (400), une borne de commande (Ctrl) de la puce de charge (U2) est connectée à la borne de sortie (OUT) de la puce de traitement principale (U1), et une borne de sortie (OUT) de la puce de charge (U2) est connectée au produit (500) en cours de charge.

3. Chargeur, comprenant un circuit de charge selon la revendication 1 ou la revendication 2.
